# EUROPEAN PATENT SPECIFICATION

(11) **EP 2 340 964 B1**
(45) Date of publication and mention of the grant of the patent: **22.08.2012**
(21) Application number: 10197476.4
(22) Date of filing: 31.12.2010
(51) Int. Cl.: B60P 1/36, B65G 65/46, E01C 19/20

(54) **A trailer, a method for manufacturing a trailer and a method for dosing antiskid treatment material**
Anhänger und Verfahren für Dosierung Gleitschutzmaterial
Procédé de fabrication d'une remorque et remorque pour distribuer un matériau antidérapant

(30) Priority: 31.12.2009 FI 20096416
(43) Date of publication of application: 06.07.2011
(73) Proprietor: Seppo Kuisma Oy, 24100 Salo (FI)
(72) Inventor: Liukkonen, Pertti, 50100, Mikkeli (FI)
(74) Representative: Suominen, Kaisa Liisa

(56) References cited:
- AU-B2- 575 720
- DE-U1- 29 713 754
- DE-U1- 29 921 399
- FR-A- 1 537 889
- FR-A1- 2 781 825

## Description

### TECHNICAL FIELD OF THE INVENTION

The invention relates to a trailer, which has a frame, which frame has a first end and a second end, wheels attached to the frame on bearings, a tow bar in the first end of the frame for attaching to a pulling device, such as a tractor, and a bed, which is attached at its first end to the frame with first pivoted attaching means. The invention also relates to a method for manufacturing a trailer and a method for dosing antiskid treatment material onto the surface of a transport infrastructure.

### BACKGROUND OF THE INVENTION

In winter, ice and hard-pressed snow forms on the surface of passages, courtyards and parking areas, which makes the surfaces of traffic areas slippery. In order to remove the slipperiness, sand, salt, fine crushed stone or a mixture thereof is spread onto the surfaces.

On bicycle and pedestrian traffic passages tractor-pulled sanding carts, which are built especially for this purpose, are often used in dosing antiskid treatment material. The sanding carts have a funnel-shaped container for crushed stone, through a gap in the bottom of which the crushed stone or sand is dosed onto the surface of the transport infrastructure. Several manufactures make the above-described sanding carts. For example sanding carts sold under the product name Soukkio are known. A disadvantage of the known sanding carts is the small size of the container for crushed stone, which shortens the effective time of use of the device. The sanding cart can also not be used for any other purpose than for spreading antiskid treatment material, wherefore the device is unused during the largest part of the year.

Antiskid treatment material is spread onto driving lanes, roads and streets also with lorries or with tractor-pulled trailers, onto the rear part of the tipping bed of which a spreading device for crushed stone has been attached. Antiskid treatment material is dosed from the bed to the spreading device by lifting the bed towards a vertical position, whereby the antiskid treatment material runs toward the rear part of the bed and the spreading device. A disadvantage of such a solution is that the driver of the lorry or tractor cannot see the content of the bed in the tilted position, and thus cannot estimate the dosing need of the crushed stone or sand, i.e. the suitable tilting angle of the bed. Additionally the crushed stone and sand moving towards the rear part of the bed move the centre of gravity of the bed to the rear part of the bed and in extreme cases even behind the rearmost axis of the trailer. This is problematic especially in tractor-pulled trailers, because the weight of the trailer is thus not directed onto the pulling wheels of the tractor.

A further solution for spreading antiskid material is known from AU575720.

### OBJECT OF THE INVENTION

It is an object of the present invention to reduce or even eliminate the above-mentioned problems appearing in prior art.

It is an object of the invention to make it easier for the driver of the pulling device of the trailer to see onto the bed of the trailer, regardless of the position of the bed.

It is an object of the invention to improve the advancing ability of the pulling device of the trailer on slippery surfaces.

It is an object of the invention to improve traffic safety by making the handling of the trailer easier for example in braking and swerving situations.

It is an object of the invention to make the use possibilities of the trailer more versatile and to increase the annual utilization rate of the trailer.

It is an object of the invention to make the dosing of an antiskid treatment material or another mass, such as gravel, from the trailer more efficient.

### DESCRIPTION OF THE INVENTION AND SOME OF ITS EMBODIMENTS

In order to achieve among others the objects mentioned above, the trailer and the methods according to the invention and other objects of the invention are characterized by what is presented in the characterizing parts of the enclosed independent claims. Some advantageous embodiments of the invention are presented in the dependent claims.

The embodiments and advantages mentioned in this text relate, where applicable, both to the trailer, the methods as well as to the uses according to the invention, even though it is not always specifically mentioned.

A typical trailer according to the invention has a frame, which frame has a first end and a second end and wheels attached to the frame on bearings. The wheels are attached to the frame by an axis. In the first end of the frame there is a tow bar, by means of which the trailer can be attached to a pulling device, such as a tractor. The trailer further includes a bed, which is attached at its first end to the frame with first pivoted attaching means. The pivoted attachment of the bed to the frame means that the bed can be tilted around an imaginary axis passing through the attaching means. The bed is thus a so-called tipping bed. The first pivoted attaching means mentioned in the invention are attached to the frame in the area between the wheels and the tow bar. The placement of the attaching means results in that when tipped, the outer end of the bed, when seen from the direction of the tow bar, rises up, and the end closer to the tow bar stays at least approximately in its place in the vertical direction.

An advantageous embodiment of the trailer according to the invention further comprises a mass transfer device for dosing gravel, crushed stone, sand or salt or the like. The mass transfer device is placed detachably in the first end of the frame of the trailer.

In an advantageous embodiment of the trailer according to the invention the mass transfer device is a scattering device for dosing an antiskid treatment material, such as crushed stone, sand or salt. Said scattering device is placed detachably in the first end of the frame of the trailer. The scattering device is advantageously placed essentially completely below the level of the upper surface of the frame. The placement of the scattering device is selected so that antiskid treatment material placed on the bed runs directly into the scattering device when tilting the bed.

A second advantageous embodiment of the trailer according to the invention further comprises a front screen, which has a front wall, which is transverse to the longitudinal direction of the trailer, and a first and a second side wall, which are essentially parallel to the longitudinal direction of the trailer. Said front screen is advantageously placed essentially completely above the level of the upper surface of the frame. The front screen forms a wall above the mass transfer device, such as the scattering device, which wall prevents for example the antiskid treatment material from running past the scattering device when tilting the bed.

In a third advantageous embodiment of the trailer according to the invention said front screen is placed at the mass transfer device and said mass transfer device is attached to the front screen, for example with a suspension attachment.

In a fourth advantageous embodiment of the trailer according to the invention the first end of the bed is fitted between the side walls of the front screen. This ensures that all the material to be tipped from the bed, such as the antiskid treatment material, moves into the space delimited by the front screen.

A fifth advantageous embodiment of the trailer according to the invention further comprises second attaching means for the pivoted attachment of the bed, which second attaching means are placed in the second end of the frame. The second attaching means make it possible to attach a bed to the frame also so that the tipping direction changes. In other words, when tipping a bed attached to the second attaching means, the outer end of the bed, when seen from the direction of the tow bar, stays in its place in the vertical direction, and the end closer to the tow bar rises up. Such a trailer, where the tipping direction of the bed can be changed, can be used for several different purposes, for example in field work or for earthmoving in the summers and for antiskid treatment work in the winters.

In an embodiment of the method according to the invention, the mass transfer device and the first bed are for another purpose detached from the frame of the trailer. Thereafter a larger bed is attached to the frame of the trailer with second attaching means, so that the tipping direction of the bed changes.

A sixth advantageous embodiment of the trailer according to the invention further comprises a cylinder, advantageously a hydraulic cylinder, the length of which can be adjusted, which is attached at its first end to the frame and at its second end to the bed. The tipping of the bed thus occurs by changing the length of the cylinder. The frame advantageously has a first attaching base for attaching the first end of the cylinder in a first attaching position and a second attaching base for attaching the first end of the cylinder in a second attaching position, which first and second attaching bases are placed at a distance from each other in the longitudinal direction of the trailer. With the aid of the alternative attaching positions of the first end of the cylinder, the cylinder can always be attached in the optimal place and position when changing the tipping direction of the bed. There can be several alternative attaching positions.

In a typical method according to the invention for manufacturing a trailer, the bed is attached to the frame of the trailer. The frame has a first end and a second end, wheels attached to the frame on bearings, and a tow bar in the first end of the frame for attaching to a pulling device, such as a tractor. In the method the first pivoted attaching means are attached to the frame in the area between the wheels and the tow bar and the bed is attached at its first end to the frame with said first pivoted attaching means.

In an advantageous embodiment of the method according the invention a mass transfer device is further attached to the first end of the frame of the trailer. The mass transfer device can for example be a ballasting device or a scattering device for dosing an antiskid treatment material, such as crushed stone, sand or salt.

In a second advantageous embodiment of the method according to the invention a front screen is further attached to the first end of the frame of the trailer, which front screen has a front wall, which is transverse to the longitudinal direction of the trailer, and a first and a second side wall, which are essentially parallel to the longitudinal direction of the trailer. Said front screen is advantageously attached essentially completely above the level of the upper surface of the frame, and said scattering device is attached essentially completely below the level of the upper surface of the frame.

An advantageous embodiment of the method according to the invention further comprises
- placing second attaching means for attaching the bed in a pivoted manner in the second end of the frame; and
for another purpose:
- detaching the mass transfer device and the bed from the frame of the trailer;
- attaching a larger bed to the frame of the trailer with second attaching means, so that the tipping direction of the bed changes.

A typical method according to the invention for dosing antiskid treatment material on the surface of a transport infrastructure has at least the following steps:
- moving a trailer on the surface of the transport infrastructure forward in its main movement direction;
- keeping antiskid treatment material on the bed of the trailer;
- dosing antiskid treatment material onto the surface of the transport infrastructure from the front part of the trailer with a dosing device placed in the front part of the trailer;
- tilting the bed of the trailer when necessary towards a vertical position, so that the rear part of the bed rises upwards, whereby antiskid treatment material slides from the bed into the scattering device in the front part of the bed.

In an embodiment of the invention antiskid treatment material is dosed at least mainly in front of the foremost wheels of the trailer.

One of the greatest advantages of the invention is that the driver of the pulling device of the trailer always has an unhindered view of the bed of the trailer, regardless of the position of the bed. This makes it easier to determine the correct tilting angle of the bed and thus makes it possible to exactly dose the mass, such as the antiskid treatment material, for example to the scattering device.

One of the greatest advantages of the invention is further that the centre of gravity of the trailer always stays close to the front end of the trailer, whereby the weight of the trailer is directed onto the pulling wheels of the pulling device. The advancing ability of the pulling device thus remains good also on slippery surfaces.

One of the greatest advantages of the invention is further that when spreading antiskid treatment material, the trailer always travels on a treated surface, i.e. on a surface, whereon antiskid treatment material has been spread. This makes the handling of the trailer easier for example in breaking and swerving situations and thus improves traffic safety.

It is an advantage of the invention that it also makes possible other use of the trailer for example in earthmoving, whereby the annual utilization rate of the trailer rises remarkably.

A so-called side transfer conveyor can be installed in the frame, with which the material to be scattered can be moved in a controlled manner in the lateral direction of the base machine, such as the trailer or scattering device, advantageously to a distance from the side of the base machine. The side transfer can be arranged on one or both sides of the base machine.

The side transfer conveyor can for example have two parts. The first part is thus typically of the same length as the width of the base machine, such as the trailer or scattering device, or the so-called work width of the scattering device. A second part can be attached as a continuation of the first part, i.e. a so-called continuation part, the length of which can vary according to need. There can be continuation parts on one or both sides of the base machine.

The side transfer conveyor can be a so-called belt conveyor, i.e. a web conveyor. The web conveyor can be placed underneath the scattering device, so that material falls from the scattering device onto the web conveyor for example from openings, which can be opened and closed in a controlled manner.

The side transfer conveyor can be a so-called transfer screw, i.e. a screw conveyor. It can be placed for example at the bottom of the scattering device. A transfer screw can easily be arranged to transfer to both sides by changing the rotation direction of the screw in its middle part.

The attachment of the continuation part, such as the web conveyor or the transfer screw, to the sand scattering device and/or another base machine, such as a trailer, is pivoted, so that the continuation part can be turned for example for the duration of the transfer transport to the side of the base machine, for example in a vertical position or horizontally backwards or forwards.

It is possible to make a device provided with a side transfer device a device, which scatters either over a part of or the entire length of the side transfer. Thus the working width can be increased for example in antiskid treatment. With the aid of the invention it is for example easy to sand an area adjacent to a road, such as a shoulder or a passage for bicycle and pedestrian traffic.

A mass transfer device provided with a side transfer conveyor makes possible a simple way of achieving a solution, where the material to be moved can easily be transported to a desired distance from the base machine, for example in order to ballast and fill a covered drain or a trench.

In a device used for example for ballasting, i.e. for example ballasting a covered drain, the gravel can first be moved with a transfer screw in the lateral direction to the edge of the device, where the gravel falls through an opening onto a web conveyor, which moves the gravel into the covered drain. With such a device it is easy to move cover gravel for cables to be installed in an excavation beside the road, before the excavation is properly filled.

An asphalt edge filling device can be arranged for example so, that mass is moved with the transfer screw to the edge of the device, from where for example the crushed stone then falls beside the new asphalt to form a shoulder area.

Other mass transfer devices can also be installed instead of the scattering device. The scattering device can be removed and another mass transfer device can be attached in its place, for example to the front screen and the transverse beam in the trailer.

### BRIEF DESCRIPTION OF THE FIGURES

The invention is described in more detail below with reference to the enclosed schematic drawing, in which
- Figure 1a: shows as an example a trailer according to the invention seen from the side,
- Figure 1b: shows the trailer of Figure 1 a seen from above,
- Figure 2: shows as an example of a trailer according to the invention as a cross-section by the front screen and scattering device,
- Figure 3: shows a trailer according to the invention on antiskid treatment duty,
- Figure 4: shows a trailer according to the invention used in earthmoving,
- Figure 5a: shows as an example a trailer according to the invention seen from the side,
- Figure 5b: shows the trailer of Figure 5a seen from above,
- Figure 6a: shows as an example a trailer according to the invention seen from the side, and
- Figure 6b: shows the trailer of Figure 6a seen from above.

### DETAILED DESCRIPTION OF THE EXAMPLES OF THE FIGURES

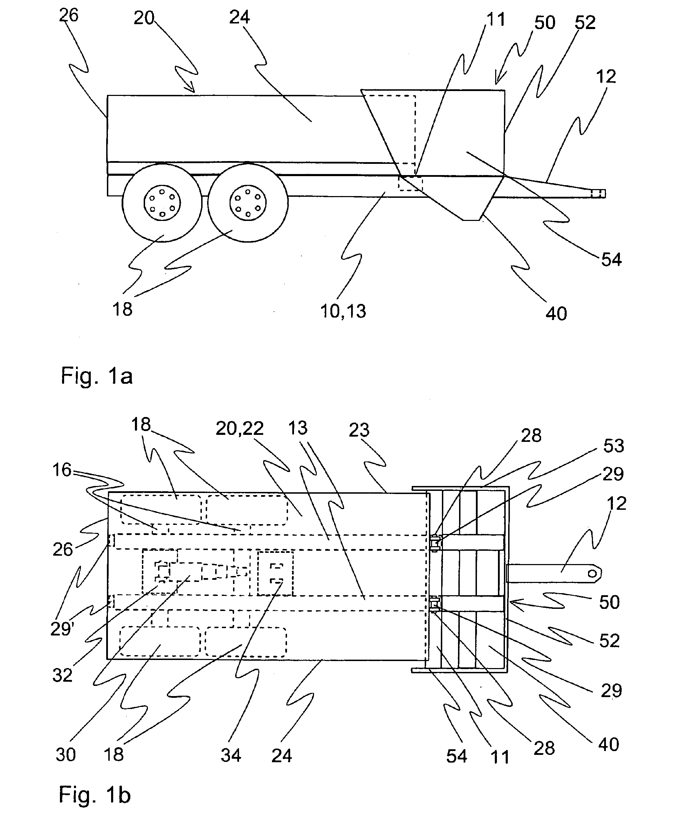

Figure 1 a shows as an example a trailer according to the invention seen from the side and Figure 1b shows the same trailer seen from above. The trailer has a frame 10, which comprises two parallel frame beams 13 at a distance from each other. In the first end of the frame there is a tow bar 12 for attaching to a pulling device, such as a tractor. In the free end of the tow bar there is a hole, wherein the hook of the pulling device is fitted. Two axes 16, in the ends of which there are wheels 18, have been attached underneath the frame. The axes are attached in a transverse position in relation to the longitudinal direction of the frame, so that their distance from the second end of the frame is smaller than the distance from the first end. The wheels are attached on bearings to the ends of the axes, i.e. they are attached to the frame via the axes. The wheels of the first axis are provided with brakes. In the area between the axes and the tow bar there is a transverse beam 11, which belongs to the frame.

On the frame there is a bed 20, which in a known manner has a bottom 22, a first and a second side edge 23, 24 and an end plate 26. The end plate of the bed is situated in the second end of the trailer, i.e. behind the axes 16 when seen from the direction of the tow bar. The bed is attached at its first end, i.e. the end closer to the tow bar, to the transverse beam 11 of the frame with joint pins 28. The transverse beam has two pipe-like sleeves 29 at a distance from each other, through which the joint pins are fitted to pass (Figure 1b). The joint pins and sleeves form the first attaching means for the pivoted attaching of the bed. Underneath the bed there is a hydraulic cylinder 30 (Figure 1 b), which is attached at its first end to the frame and at its second end to the bottom 22 of the bed. The attaching point of the first end of the hydraulic cylinder is situated approximately by the rearmost axis 16 of the trailer, between the longitudinal frame beams 13 of the trailer, where there is a first attaching base 32 for attaching the first end of the hydraulic cylinder. The attaching point of the second end of the hydraulic cylinder is situated in the bottom of the bed, in the area between an imaginary midpoint in the bed and the second end of the bed. In Figure 1b the hydraulic cylinder is in its short position, whereby the bottom of the bed settles against the upper surface of the frame beams of the trailer. When hydraulic oil is led into the hydraulic cylinder, its length grows and the bed 20 rotates around the joint pins 28 and at the same time the second end of the bed rises upwards. The trailer naturally includes hydraulic tubes, with which the hydraulic cylinder can be attached to the hydraulic system of the work machine (the hydraulic tubes are not shown in the figure).

In the first end of the trailer there is a scattering device 40 for spreading antiskid treatment material, such as crushed stone, sand and/or salt. The scattering device is attached underneath the frame 10, in the area between the transverse beam 11 and the tow bar 12. By the scattering device, above the frame, there is a front screen 50, which comprises a front wall 52, which is transverse to the longitudinal direction of the trailer, and a first side wall 53 and a second side wall 54, which are parallel to the longitudinal direction of the trailer. The front screen thus forms a wall section reminiscent of a letter U, when seen from above. The side walls extend in the longitudinal direction of the trailer from the front wall toward the second end of the trailer, so far that they overlap slightly with the side edges of the bed 20. The side walls are placed at such a distance from each other that the first end of the bed 20 fits between the side walls, and only a gap, which makes possible the tipping movement of the bed, remains between the side edges 23, 24 of the bed and the side walls of the front screen.

The front wall and side walls of the front screen are attached at their lower edges to the upper edge of the scattering device, so that they function as continuations of the trough-shaped frame part of the scattering device. With the exception of the frame beams 13, the frame of the trailer is open at the area delimited by the front screen, whereby antiskid treatment material led into the area delimited by the front screen can run practically unhindered between the frame beams into the scattering device. The front screen 50 and the scattering device are attached to each other and to the frame of the trailer detachably with a bolt attachment. The front screen and the scattering device can thus be detached from the frame easily by detaching the attaching bolts. Also the attachment of the first end of the bed to the frame and the attachment of the first and second end of the hydraulic cylinder are realized by means of easily detachable joint pins. The bed and the hydraulic cylinder can thus easily be detached from the frame when necessary.

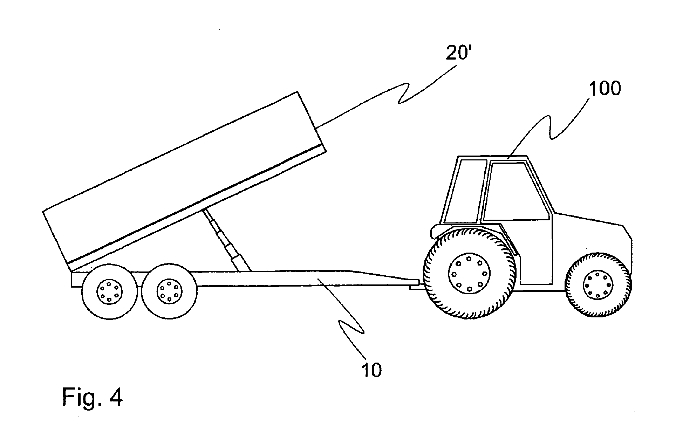

In the second end of the trailer there are second attaching means for the pivoted attachment of the bed. These second attaching means are structurally the same as the first attaching means described above, i.e. they comprise two sleeves 29' at a distance from each other and joint pins to be fitted into the sleeves. A bed can thus be attached to the frame of the trailer also so that the pivoted attaching point of the bed is situated right at the second end of the frame (Figure 4). Between the frame beams of the frame there is a second attaching base 34 for attaching the first end of the hydraulic cylinder. The second attaching base is structurally the same as the first attaching base, i.e. it comprises two parallel attaching lugs, which have a hole for the joint pin to pass through. The second attaching base is situated between the frame beams 13, at a distance from the first attaching base in the direction of the first end of the frame. When another bed is attached to the frame with the second attaching means and the hydraulic cylinder is attached at its first end to the second attaching base and at its second end to the bottom of the bed, a trailer is obtained, the bed of which tilts, i.e. tips, in the conventional way in the direction of the rear part of the trailer. When the trailer is not used for antiskid treatment and the front screen and scattering device are detached from the frame, the bed can be longer than presented in Figures 1 a and 1 b. The end plate of the bed can thus be situated for example by the front wall 52 of the removed front screen 50, whereby the bed is substantially longer than in the figures described above. A trailer provided with such a bed can be used for example in earthmoving work.

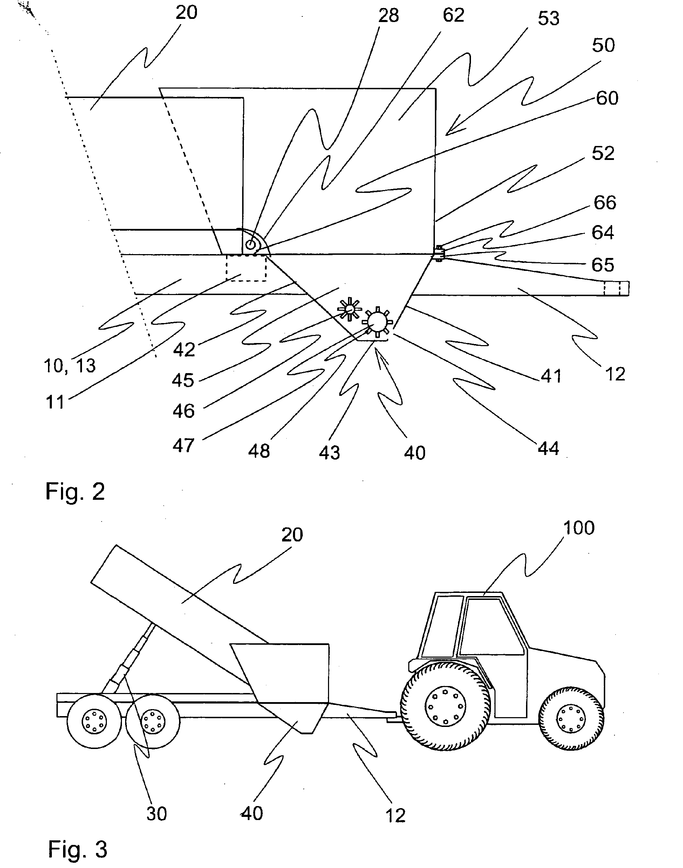

Changing the purpose of the trailer according to the invention from antiskid treatment to some other use does not necessarily require detaching the front screen 50 and scattering device 40, but it is enough to just change the attaching point and tipping direction of the bed 20 and changing the attachment of the hydraulic cylinder. The bed to be attached to the frame can be dimensioned so that its upwards rising second end is situated in the space delimited by the front screen and substantially fills it completely. The scattering device is situated completely underneath the frame 10, so it does not disturb the use of another bed. Figure 2 shows a trailer according to the invention as a cross-section cut by the front screen 50 and the scattering device 40. Figure 2 shows the cross-section of the trailer in its normal use position, i.e. in the position where the trailer is supported by the wheels on the surface of the ground. The expressions describing direction and/or placement used in the description of the figure, such as above, underneath, upwards or downwards, mean directions which are valid when the trailer is in the position according to Figure 2. If the position of the trailer is another than the one in Figure 2, the expressions describing direction and placement change in a corresponding manner.

The scattering device has a frame part, which has a front flank 41, the upper edge of which tilts towards the tow bar 12, and a rear flank 42, the upper edge of which tilts towards the bed 20. As a continuation of the downwards pointing edge of the rear flank there is a bottom plate 43, which is essentially in a horizontal position. Between the free edge of the bottom plate, which edge points towards the tow bar, and the downwards pointing edge of the front flank there is a gap 44, through which antiskid treatment material, such as crushed stone, sand and/or salt can move from the scattering device to the surface to be treated. The scattering device further has end plates 45, which are attached to the opposite end edges of the front and rear flanks, so that the end plates, the front and rear flank and the bottom plate form the trough-like frame part of the scattering device. The scattering device is attached to the frame of the trailer so that the upper edges of the end plates, the front and rear flank settle essentially at the level of the upper edge of the frame beams 13 in the vertical direction. In the front flank and the rear frank there are notches, wherein the frame beams are fitted.

The front screen 50 is attached to the frame 10 of the trailer so that the lower edges of the front wall 52 and the side walls 53, 54 are supported on the frame beams 13 and the transverse beam 11. At the bottom edges of the front and side walls there are flanges 64, which align with flanges 65 in the upwards pointing edges of the trough-like frame part of the scattering device. The afore-mentioned flanges are attached to each other with attaching bolts 66, which are fitted in the holes penetrating the flanges and tightened into place. The scattering device is thus attached to the bottom edge of the front screen with a suspension attachment.

Inside the scattering device there are two axes, a mixing axis 46 and a sanding axis 47, which extend from the first end plate to the second end plate, i.e. over the entire width of the scattering device. The sanding axis is placed above the bottom plate 43, near the gap 44, so that when the sanding axis rotates, the plate-like blades 48 on its outer surface push antiskid treatment material into the gap. The mixing axis is in the vertical direction situated slightly above the sanding axis, and behind the sanding axis when seen from the direction of the tow bar 12. The purpose of the mixing device is to mix the antiskid treatment material in the scattering device into an even mixture and crush possible lumps and cakes therein, whereafter the sanding axis doses antiskid treatment material through the gap 44 onto the surface to be treated. During the use of the scattering device the mixing axis and sanding axis are rotated with actuators belonging to the device, which are not shown in the figure. The structure and operating principle of the scattering device are known as such among others from the sanding carts mentioned in the introduction, so they are not described further in this context.

In the first end of the bed 20, in the edge of the bottom 22, there are two pairs of attaching lugs 60, which have a hole for the joint pin 28 to pass through. Two sleeves 29 are attached to the upper surface of the transverse beam 11 (Figure 1b) at a distance from each other, so that they are always situated between two adjacent attaching lugs. The bed 20 is attached at its first end to the frame 10 by fitting a joint pin 29 into the holes in the attaching lugs, so that it passes through the sleeve. The sleeves in the transverse beams and the joint pins to be fitted into them form the first attaching means for the pivoted attachment of the bed 20.

A flexible cover strip 62, which is essentially as wide as the entire bed, is attached to the edge of the bottom 22 of the bed, which cover strip extends from the free edge of the bottom to the upper surface of the transverse beam. The purpose of the cover strip is to protect the pivoted attachment structure of the bed from antiskid treatment material and to steer the antiskid treatment material into the trough-like frame part of the scattering device when tilting the bed.

Figure 3 shows a trailer according to the invention in an operating situation, where antiskid treatment material, such as crushed stone, sand and/or salt is dosed with the trailer onto the surface of a transport infrastructure. The trailer is attached to a tractor 100 functioning as a pulling device by fitting the hook of the tractor into the hole in the tow bar 12 of the trailer. The hydraulic tubes of the trailer are attached to the hydraulic system of the tractor with hydraulic tubes, which are not shown in the figure. In a use situation the trailer is moved mainly by pulling it with the tractor or another pulling device. When moving in its main movement direction its tow bar thus moves in front of the wheels, when seen in the movement direction. It is clear that the trailer can also be reversed, whereby its wheels are in front of the tow bar, when seen in the movement direction. Moving in reverse is however not the main movement direction of the trailer.

In an antiskid treatment situation antiskid treatment material, such as sand, crushed stone and/or salt or a mixture thereof has been loaded onto the bed 20 of the trailer. The tractor driver drives the tractor along the transport infrastructure to be treated and doses antiskid treatment material into an even layer onto the surface of the transport infrastructure using the scattering device 40. When the amount of antiskid treatment material in the scattering device decreases, the driver tilts the bed towards the vertical position, whereby more antiskid treatment material runs from the bed into the scattering device. The tilting of the bed happens so that hydraulic oil is led into the hydraulic cylinder 30 from the hydraulic system of the tractor, whereby the length of the cylinder grows. The driver can monitor the amount of content in the scattering device and the bed from the tractor's cabin and always perform the necessary tilting procedures of the bed based on his visual observations.

Figure 4 shows the use of a trailer according to the invention for another purpose. When the trailer is not used for spreading antiskid treatment material, a bed 20' can be attached to the frame 10 of the trailer with second attaching means, so that the tipping direction of the bed changes. The tipping axis of the bed, i.e. the axis, around which the bed rotates in a tipping situation, is thus right in the second end of the frame of the trailer. The bed can be clearly longer, because it can now also utilize the space reserved for the front screen. A trailer provided with such a large-size bed can be used for example in earthmoving. In the trailer shown in Figure 4 the front screen and scattering device are detached from the frame at the same time as a larger bed 20' is attached to the trailer. The bed can however also be dimensioned so that its upwards rising end fits into the space delimited by the front screen, whereby detaching the front screen and the scattering device is not necessary when using a larger bed.

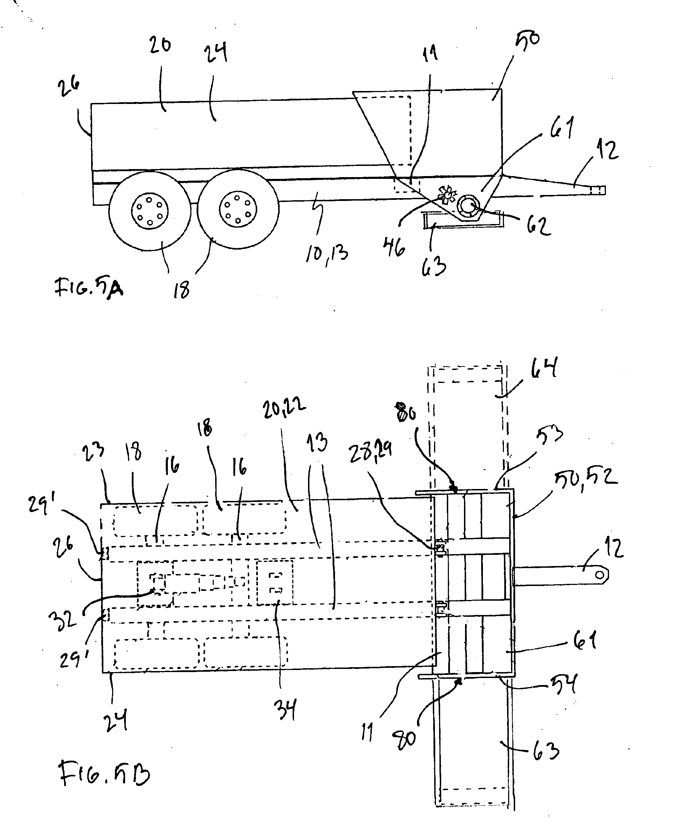

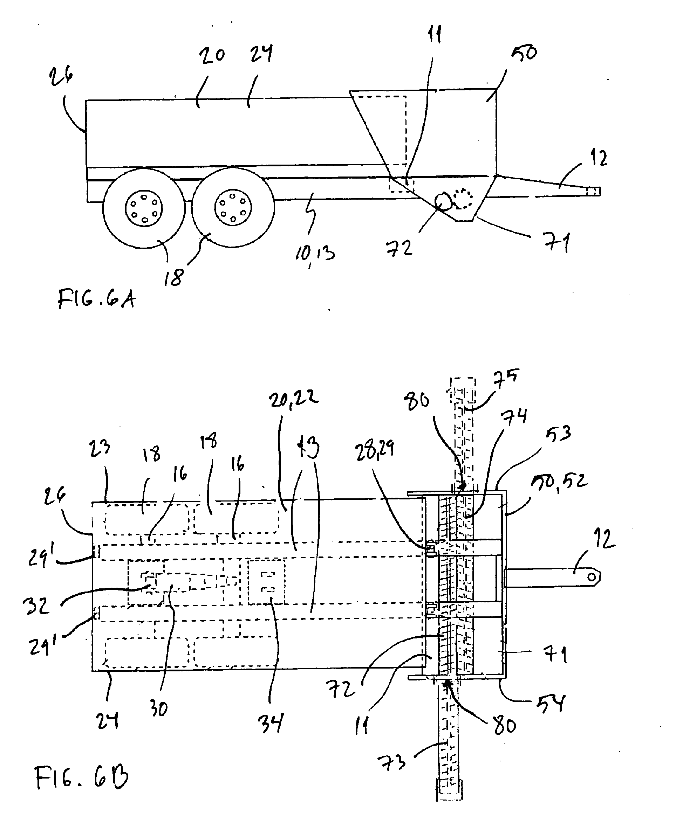

The trailers in Figures 5a, 5b, 6a and 6b essentially correspond, in terms of structure and function, to the solutions shown in Figures 1-4. The difference is that instead of scattering devices 40, the trailers in Figures 5a, 5b, 6a and 6b are provided with mass transfer devices 61 and 71 equipped with a side transfer conveyor, by means of which devices the material in the trailer can be moved in the lateral direction of the trailer to a distance from the side of the base machine.

The ballasting device 61 in Figure 5a and 5b comprises a screw conveyor 62, which is approximately as wide as the trailer, arranged by the front screen 50. A belt conveyor, i.e. a web conveyor 63, has been arranged as a continuation of the screw conveyor 62. A possible second web conveyor 64 has been drawn with dotted lines on the other side of the trailer. The web conveyor 63 is placed underneath the screw conveyor 62, so that material falls onto the web conveyor for example through a gap in the front screen. The web conveyor 63 drops the gravel from its end for example into an excavation to be filled.

The mass transfer device 71 in Figure 6a and 6b comprises a screw conveyor 72, which is approximately as wide as the trailer, arranged by the front screen 50. A second screw conveyor 73 has been arranged as a continuation of the screw conveyor 72. A possible second pair of screw conveyors 74, 75 has also been drawn in the figure, for transferring material to the other side of the trailer. The screw conveyor 73 is situated directly as a continuation of the screw conveyor 72 on the same axis, so that the material moves straight from the screw conveyor 72 into the screw conveyor 73. The screw conveyors 73 and 75 can be equipped with scattering means over their entire length, whereby for example antiskid treatment material can be spread over a large area. Scattering means can also in a traditional manner be arranged by the trailer.

The attachment of continuation parts which extend outside the width of the trailer, i.e. the web conveyors 63 and 64 and the screw conveyors 73 and 75, to the trailer is pivoted in the spots 80, so that the continuation part can be turned for example for the duration of transfer transport in the direction of the side of the trailer, for example in a vertical position or horizontally backwards or forwards.

The figures show only a few preferred embodiments according to the invention. The figures do not specifically show matters that are of secondary importance in view of the main idea of the invention, known as such or obvious as such for someone skilled in the art. It is obvious to someone skilled in the art that the invention is not limited merely to the above-described examples, but the invention may vary within the scope of the claims presented below. The dependent claims present some possible embodiments of the invention, and they are as such not to be considered to restrict the scope of protection of the invention.

## Claims

1. An arrangement comprising
- a trailer, which has a frame (10), which frame has a first end and a second end, wheels (18) attached to the frame on bearings, a tow bar (12) in the first end of the frame for attaching to a pulling device, such as a tractor (100),
- a first pivoted attaching means that are attached to the frame in the area between the wheels and the tow bar,
- a bed (20), which is attachable at its first end to the frame with first pivoted attaching means (28, 29),
- a mass transfer device (40) for dosing gravel, crushed stone, sand or salt or the like, which mass transfer device is placed detachably in the first end of the frame (10) of the trailer,
**characterised in that** the arrangement further comprises
- a second attaching means (29'), which are placed in the second end of the frame (10), and
- a larger bed (20'), which is attachable in a pivoted manner to the frame with the second attaching means (29').

2. The trailer according to claim 1, **characterised in that** the mass transfer device is a scattering device (40) for dosing antiskid treatment material, such as crushed stone, sand or salt.

3. The trailer according to any of the claims 1-2, **characterised in that** it further comprises a front screen (50), which has a front wall (52), which is transverse to the longitudinal direction of the trailer, and a first and a second side wall (53, 54), which are essentially parallel to the longitudinal direction of the trailer.

4. The trailer according to claim 3, **characterised in that** the first end of the bed (20) is fitted between the side walls (53, 54) of the front screen (50).

5. The trailer according to any of the preceding claims 1-4, **characterised in that** it is provided with a side transfer conveyor, with which material to be transferred in the mass transfer device can be transferred in a controlled manner in the lateral direction of the trailer.

6. The trailer according to claim 5, **characterised in that** the side transfer conveyor is arranged on one or both sides of the trailer, to transfer material to a distance from the side of the trailer.

7. The trailer according to claim 6, **characterised in that** the side transfer conveyor has two parts, so that the first part is essentially of the same length as the width of the trailer and a second part has been arranged as a continuation of the first part, to transfer material to a distance from the side of the trailer.

8. The trailer according to claim 7, **characterised in that** the attachment of the second part of the side transfer conveyor is pivoted, so that the second part can be turned in relation to the trailer for example into a vertical position or horizontally backwards or forwards.

9. A method for a trailer, which method comprises
- attaching a bed (20) to a frame (10) of a trailer, which frame has a first end and a second end, wheels (18) attached to the frame on bearings, and a tow bar (12) in the first end of the frame for attaching to a pulling device, such as a tractor (100);
- attaching first pivoted attaching means (28, 29) to the frame in the area between the wheels and the tow bar;
- attaching the bed (20) at its first end to the frame with said first pivoted attaching means,
- further attaching a mass transfer device, such as a scattering device (40), to the first end of the frame (10) of the trailer, for dosing for example gravel or antiskid treatment material, such as crushed stone, sand or salt.
**characterised in**
- placing second attaching means for attaching the bed in a pivoted manner in the second end of the frame;
and for another purpose:
- detaching the mass transfer device and the bed from the frame of the trailer;
- attaching a larger bed to the frame of the trailer with second attaching means, so that the tipping direction of the bed changes.

10. The method according to claim 9, **characterised in**
- further attaching a front screen (50) to the first end of the frame (10) of the trailer, which front screen has a front wall (52), which is transverse to the longitudinal direction of the trailer, and a first and a second side wall (53, 54), which are essentially parallel to the longitudinal direction of the trailer.

## Patentansprüche

1. Anordnung, umfassend
- einen Anhänger, der ein Gestell (10) hat, wobei das Gestell ein erstes Ende und ein zweites Ende hat, Räder (18), die an dem Gestell auf Lagerungen befestigt sind, eine Schleppstange (12) an dem ersten Ende des Gestells zum Befestigen an einer Zugvorrichtung, wie z.B. einem Traktor (100), hat,
- erste schwenkbare Befestigungsmittel, die an dem Gestell in dem Gebiet zwischen den Rädern und der Schleppstange befestigt sind,
- eine Lagerfläche (20), welche an ihrem ersten Ende an dem Gestell mit ersten schwenkbaren Befestigungsmitteln (28, 29) befestigt werden kann,
- eine Stoffübertragungsvorrichtung (40) zum Dosieren von Schotter, zerkleinerten Steinen, Sand oder Salz oder Entsprechendem, wobei die Stoffübertragungsvorrichtung entfernbar auf dem ersten Ende des Gestells (10) des Anhängers platziert ist,
**dadurch gekennzeichnet, dass** die Anordnung weiterhin umfasst
- zweite Befestigungsmittel (29'), die an dem zweiten Ende des Gestells (10) platziert sind und
- eine größere Lagerfläche (20'), die in einer schwenkbaren Art und Weise an dem Gestell mit den zweiten Befestigungsmitteln (29') befestigt werden kann.

2. Anhänger nach Anspruch 1, **dadurch gekennzeichnet, dass** die Stoffübertragungsvorrichtung eine Streuvorrichtung (40) zum Dosieren von Antirutsch-Behandlungsmaterial, wie z.B. zerkleinertem Stein, Sand oder Salz ist.

3. Anhänger nach einem der Ansprüche 1-2, **dadurch gekennzeichnet, dass** er weiterhin eine Frontblende (50), die eine Frontwand (52), die quer zu der Längsrichtung des Anhängers ist, und eine erste und eine zweite Seitenwand (53, 54), die im Wesentlichen parallel zu der Längsrichtung des Anhängers sind, hat.

4. Anhänger nach Anspruch 3, **dadurch gekennzeichnet, dass** das erste Ende der Lagerfläche (20) zwischen die Seitenwände (53, 54) der Frontblende (50) eingepasst ist.

5. Anhänger nach einem der voranstehenden Ansprüche 1-4, **dadurch gekennzeichnet, dass** er mit einem Seitenübertragungsförderband bereitgestellt ist, mit welchem Material, das in die Stoffübertragungsvorrichtung übertragen werden soll, in einer gesteuerten Art und Weise entlang der Längsrichtung des Anhängers übertragen werden kann.

6. Anhänger nach Anspruch 5, **dadurch gekennzeichnet, dass** das Seitenübertragungsförderband an einer oder beiden Seiten des Anhängers angeordnet ist, um Material zu einer von der Seite des Anhängers entfernten Stelle zu übertragen.

7. Anhänger nach Anspruch 6, **dadurch gekennzeichnet, dass** das Seitenübertragungsförderband zwei Teile hat, sodass der erste Teil im Wesentlichen dieselbe Länge hat wie die Breite des Anhängers, und ein zweites Teil als eine Fortsetzung des ersten Teils angeordnet wurde, um Material zu einer von der Seite des Anhängers entfernten Stelle zu übertragen.

8. Anhänger nach Anspruch 7, **dadurch gekennzeichnet, dass** die Befestigung des zweiten Teils des Seitenübertragungsförderbandes schwenkbar ist, sodass das zweite Teil in Bezug auf den Anhänger z.B. in eine vertikale Position oder horizontal nach hinten oder nach vorne gedreht werden kann.

9. Verfahren für einen Anhänger, wobei das Verfahren umfasst
- Befestigen einer Lagerfläche (20) an einem Gestell (10) eines Anhängers, wobei das Gestell ein erstes Ende und ein zweites Ende, Räder (18), die an dem Gestell auf Lagerungen befestigt sind, und eine Schleppstange (12) an dem ersten Ende des Gestells zum Befestigen an einer Zugvorrichtung, wie z.B. einen Traktor (100), hat;
- Befestigen von ersten schwenkbaren Befestigungsmitteln (28, 29) an dem Gestell in dem Gebiet zwischen den Rädern und der Schleppstange;
- Befestigen der Lagerfläche (20) an ihrem ersten Ende an dem Gestell mit den ersten schwenkbaren Befestigungsmitteln,
- weiterhin Befestigen einer Stoffübertragungsvorrichtung, wie z.B. einer Streuvorrichtung (40), an dem ersten Ende des Gestells (10) des Anhängers, zum Dosieren von z.B. Schotter oder Antirutsch-Behandlungsmaterial, wie z.B. zerkleinerten Steinen, Sand oder Salz,
**gekennzeichnet durch**:
- Platzieren von zweiten Befestigungsmitteln zum Befestigen der Lagerfläche in einer schwenkbaren Art und Weise an dem zweiten Ende des Gestells;
und für einen weiteren Zweck:
- Lösen der Stoffübertragungsvorrichtung und der Lagerfläche von dem Gestell des Anhängers;
- Befestigen einer größeren Lagerfläche an dem Gestell des Anhängers mit zweiten Befestigungsmitteln, sodass sich die Kipprichtung der Lagerfläche ändert.

10. Verfahren nach Anspruch 9, **gekennzeichnet durch**:
- weiterhin Befestigen einer Frontblende (50) an dem ersten Ende des Gestells (10) des Anhängers, wobei die Frontblende eine Frontwand (52), die quer zu der Längsrichtung des Anhängers ist, hat, und eine erste und eine zweite Seitenwand (53, 54), die im Wesentlichen parallel zu der Längsrichtung des Anhängers sind, hat.

## Revendications

1. Dispositif comportant :
- une remorque, laquelle comprend un châssis (10), lequel châssis présente une première extrémité et une seconde extrémité, des roues (18) fixées au châssis sur des paliers, une barre de remorquage (12) dans la première extrémité du châssis pour attacher un dispositif de traction, tel qu'un tracteur (100),
- des premiers moyens de fixation à pivotement qui sont fixés sur le châssis dans la zone comprise entre les roues et la barre de remorquage,
- une benne (20) qui peut être fixée au niveau de sa première extrémité au châssis avec les premiers moyens de fixation à pivotement (28, 29),
- un dispositif de transfert de matière (40) permettant de doser du gravier, de la pierre concassée, du sable ou du sel ou analogue, lequel dispositif de transfert de matière est placé de façon détachable dans la première extrémité du châssis (10) de la remorque,
**caractérisé en ce que** le dispositif comporte, de plus,
- des seconds moyens de fixation (29') qui sont placés dans la seconde extrémité du châssis (10), et
- une benne plus grande (20') qui peut être attachée, de façon à pouvoir pivoter, au châssis avec les seconds moyens de fixation (29').

2. Remorque selon la revendication 1, **caractérisée en ce que** le dispositif de transfert de matière est un dispositif de distribution (40) permettant de doser un matériau de traitement antidérapant, tel que de la pierre concassée, du sable ou du sel.

3. Remorque selon l'une quelconque des revendications 1-2, **caractérisée en ce qu'**il comporte, de plus, un écran frontal (50), lequel comporte une paroi avant (52), laquelle est transverse à la direction longitudinale de la remorque, et une première et une seconde parois latérales (53, 54), qui sont essentiellement parallèles à la direction longitudinale de la remorque.

4. Remorque selon la revendication 3, **caractérisée en ce que** la première extrémité de la benne (20) est ajustée entre les parois latérales (53, 54) de l'écran frontal (50).

5. Remorque selon l'une quelconque des revendications précédentes 1 à 4, **caractérisée en ce qu'**elle est prévue avec un convoyeur de transfert latéral, avec lequel le matériau à transférer dans le dispositif de transfert de matière peut être transféré de façon contrôlée dans la direction latérale de la remorque.

6. Remorque selon la revendication 5, **caractérisée en ce que** le convoyeur de transfert latéral est agencé sur l'un ou sur les deux côtés de la remorque pour transférer un matériau à une certaine distance du côté de la remorque.

7. Remorque selon la revendication 6, **caractérisée en ce que** le convoyeur de transfert latéral comporte deux parties, de sorte que la première partie soit essentiellement de la même longueur que la largeur de la remorque et que la seconde partie ait été agencée comme un prolongement de la première partie, afin de transférer un matériau à une certaine distance du côté de la remorque.

8. Remorque selon la revendication 7, **caractérisée en ce que** la fixation de la seconde partie du convoyeur de transfert latéral pivote de façon que la seconde partie puisse tourner par rapport à la remorque, par exemple, vers une position verticale ou horizontalement, vers l'arrière ou vers l'avant.

9. Procédé destiné à une remorque, lequel procédé comprend le fait de
- fixer une benne (20) à un châssis (10) d'une remorque, lequel châssis présente une première extrémité et une seconde extrémité, des roues (18) fixées au châssis sur des paliers, et une barre de remorquage (12) dans la première extrémité du châssis pour être attachée à un dispositif de traction, tel qu'un tracteur (100) ;
- fixer des premiers moyens de fixation à pivotement (28, 29) au châssis dans la zone située entre les roues et la barre de remorquage ;
- fixer la benne (20) au niveau de sa première extrémité au châssis avec lesdits premiers moyens de fixation à pivotement,
- fixer de plus un dispositif de transfert de matière, tel qu'un dispositif de distribution (40), à la première extrémité du châssis (10) de la remorque, en vue de doser, par exemple, du gravier ou un matériau de traitement antidérapant, tel que de la pierre broyée, du sable ou du sel,
**caractérisé par** le fait de
- placer des seconds moyens de fixation pour fixer la benne de façon à pivoter dans la seconde extrémité du châssis ;
et dans un autre objectif :
- détacher du châssis de la remorque le dispositif de transfert de matière et la benne ;
- fixer une benne plus grande au châssis de la remorque avec les seconds moyens de fixation, de façon que la direction du mouvement de bascule de la benne soit modifiée.

10. Procédé selon la revendication 9, **caractérisé par** le fait de
- fixer, de plus, un écran frontal (50) à la première extrémité du châssis (10) de la remorque, lequel écran frontal présente une paroi avant (52), laquelle est transverse à la direction longitudinale de la remorque, et une première et une seconde parois latérales (53, 54), lesquelles sont essentiellement parallèles à la direction longitudinale de la remorque.
